# DEMANDE DE BREVET EUROPEEN

(11) **EP 2 450 480 A1**
(43) Date de publication de la demande: **09.05.2012**
(21) Numéro de dépôt: 11188304.7
(22) Date de dépôt: 08.11.2011
(51) Int. Cl.: D04H 1/54, D04H 1/74, A45C 3/04, C08J 11/06, D01F 6/62, D04H 1/435, D04H 1/4274, D04H 1/55

(54) **Procédé de fabrication de textile à partir de PET recyclé et recyclable**

(30) Priorité: 08.11.2010 BE 201000659
(71) Demandeur: Promodefi SA, 1040 Etterbeek (BE)
(72) Inventeur: Vandervliet, Patrick, 1040 ETTERBEEK (BE)
(74) Mandataire: Coulon, Ludivine

(57) **Abrégé**

Procédé de recyclage de polyéthylène téréphtalate usagé pour fabriquer une matière textile non tissée, comprenant les étapes de chauffage d'une matière comprenant majoritairement du polyéthylène téréphtalate recyclé présentant une première viscosité intrinsèque, de préférence sous forme de paillettes, pour obtenir un liquide et extrusion dudit liquide ainsi obtenu en fibres de PET extrudées présentant une deuxième viscosité intrinsèque inférieure ou égale à la première viscosité intrinsèque; peignage des fibres extrudées présentant ladite deuxième viscosité intrinsèque avec coupage à une dimension prédéterminée pour obtenir des fibres coupées de dimension prédéterminée; superposition en couches croisées des dites fibres coupées de dimension prédéterminée, et; compression à chaud des dites couches de fibres croisées pour obtenir ladite matière textile non tissée, et les sacs obtenus à partir du textile non tissé.

## Description

La présente invention se rapporte à un procédé de recyclage d'objets de polyéthylène téréphtalate (PET) usagés, en particulier de bouteilles et conteneurs divers.

Le recyclage des emballages et des déchets en matière plastique est aujourd'hui une pratique courante. Cependant, pour être utilisés dans les procédés actuels, les déchets en matière plastique doivent être de qualité suffisante pour pouvoir être recyclés valablement. Une source majeure de déchets en matière plastique réside dans les emballages et en particulier dans les bouteilles en matière plastique pour boissons qui sont constituées de PET.

Les flacons en matière plastique en polyéthylène à haute densité sont quant à eux récupérés dans des filières spécialisées. Les bouteilles en PET récupérées comprennent différents types de PET en mélange : les bouteilles en PET transparent, en PET vert ou en PET bleu ; les autres PET colorés ne représentent qu'une fraction mineure. Dans certains cas, ces bouteilles en mélange sont séparées de manière optique ou manuellement (inspection visuelle) pour fournir trois fractions distinctes : les bouteilles en PET incolores, en PET vert et en PET bleu.

Les déchets et emballages opaques en polyéthylène haute densité (HDPE) ou de colorations autres que le vert ou le bleu sont moins adaptés au recyclage. Actuellement, les procédés de recyclage préfèrent les objets et emballages en matière plastique de bonne qualité.

A ce sujet, le document de Vikas, « Polyester waste Recycling : Sources, Processing Methods & End Uses », juin 1999, enseigne que la fraction de bouteille en PET présente une viscosité intrinsèque comprise entre 0,7 et 0,8 dl/g. Lorsqu'il est souhaitable de recycler des paillettes de PET, il sera nécessaire de les fondre, par exemple simultanément à une étape d'extrusion. Malheureusement, le PET est sensible à la dégradation hydrolytique qui résulte en une réduction de son poids moléculaire dont la viscosité intrinsèque est une mesure. Cette dégradation hydrolytique est un phénomène connu qui oblige les fabricants à sécher le plus possible les paillettes de PET pour réduire drastiquement leur teneur en eau et ainsi réduire la dégradation hydrolytique lors de la fusion de celui-ci.

Vikas enseigne également que pour pouvoir fabriquer des fibres de PET, la viscosité intrinsèque du produit de départ et du produit recyclé doit être d'au moins 0,6 dl/g pour permettre un filage correct. Même si les paillettes issues de bouteilles présentent une viscosité intrinsèque de 0,7 à 0,8 (par opposition à la viscosité des paillettes ou flocons issus de films ou autres emballages qui est de 0,55 à 0,65), après fusion et extrusion, les fils extrudés présentent généralement une viscosité intrinsèque bien inférieure. Dès lors, Vikas enseigne que, pour pallier cette dégradation thermique du PET, il est nécessaire d'effectuer une polycondensation en aval de la fusion du PET pour augmenter le poids moléculaire du PET et ainsi sa viscosité intrinsèque.

Le document de Vikas décrit également le filage (spinning) de PET fondu pour obtenir des fils partiellement étirés (spun tow or POY pour « partially oriented yarn »), qui repose sur une injection à travers une filière de PET fondu pour former des fibres continues ayant une viscosité intrinsèque d'au moins 0,6 dl/g. Les fibres ainsi formées sont ensuite envoyées dans une cellule de filage et pourront ensuite être assemblées pour former une matière textile. L'inconvénient de cette technique est donc que les fibres doivent impérativement avoir une viscosité intrinsèque d'au moins 0,6 dl/g pour que les têtes d'injection ne se bouchent pas.

Le document FR2439074 enseigne d'ailleurs à ce sujet d'effectuer, pour pallier les mêmes inconvénients, d'effectuer une polycondensation sous pression réduite à une température d'environ 300°C à 3,5 Torr. De cette façon, le PET est re-condensé grâce à la présence de traces de catalyseur résiduel et les impuretés sont éliminées sous formes de produits volatils. Cette post-condensation permet d'atteindre une viscosité intrinsèque de 0,67 requise pour filer le PET ultérieurement et ainsi produire des matières textiles.

D'autres procédés existent actuellement et permettent d'utiliser du PET recyclé pour la fabrication de textiles mais dans ce cas, du PET neuf est ajouté en mélange au PET recyclé pour pallier cette dégradation hydrolytique et thermique du PET recyclé et ainsi atteindre la viscosité intrinsèque requise pour la fabrication de textile.

Malheureusement, on voit mal comment inscrire dans un processus écologique visant à réduire les déchets de matière plastique, en les recyclant, une étape de post-condensation à haute température et sous pression réduite qui par nature requiert une quantité d'énergie importante, augmentant de cette façon l'impact environnemental négatif.

On connaît également de l'art antérieur un procédé de recyclage d'objets de PET usagés, selon lequel on utilise le PET recyclé pour qu'il soit utilisé par exemple comme revêtement intérieur pour véhicules ou d'autres usages industriels par exemple pour recouvrir le plafond de véhicules. L'inconvénient est que le matériau obtenu à partir de ce procédé se déchire facilement et qu'il manque d'ouvrabilité.

L'invention a donc pour but de remédier au moins en partie à ces inconvénients, en proposant un procédé de recyclage de déchets de PET usagés permettant d'obtenir une matière textile non-tissée particulièrement résistante quand elle est simultanément soumise à une force de traction latérale et transversale, afin d'éviter que celle-ci se déchire, qui est écologique et moins coûteux que les procédés actuels.

Ceci s'avère particulièrement utile pour la fabrication de cabas réutilisables pour lesquels la résistance au déchirement doit être élevée. En effet, l'utilisateur de tels cabas doit pouvoir utiliser le cabas même lorsque celui-ci est chargé de provisions et porté par une ou plusieurs poignées sans que celui-ci ne se déchire. Si l'on connaît aujourd'hui de tels cabas ou sacs à provision réutilisables, ils sont formés de 80% de polyéthylène téréphtalate au maximum sans quoi ils perdent leur qualité de durabilité et ne sont pas imprimables, et de 20% d'un film d'impression en OPP (oriented polypropylene).

Pour résoudre ce problème, il est prévu suivant l'invention, un procédé tel qu'indiqué au début, comprenant les étapes de
a) chauffage d'une matière comprenant majoritairement du polyéthylène téréphtalate recyclé présentant une première viscosité intrinsèque, de préférence sous forme de paillettes, pour obtenir un liquide et extrusion dudit liquide ainsi obtenu en fibres de PET extrudées présentant une deuxième viscosité intrinsèque inférieure ou égale à ladite première viscosité intrinsèque;
b) peignage desdites fibres de PET extrudées présentant ladite deuxième viscosité intrinsèque avec coupage à une dimension prédéterminée pour obtenir des fibres coupées de dimension prédéterminée;
c) superposition en couches croisées desdites fibres coupées de dimension prédéterminée, et;
d) compression à chaud desdites couches de fibres croisées pour obtenir une matière textile.

Comme on peut le constater, dans le procédé selon l'invention, les fibres de PET extrudées sont directement peignées et coupées à une dimension prédéterminée sans passer par une étape de post-condensation du PET extrudé, ce qui explique pourquoi la deuxième viscosité intrinsèque est inférieure ou égale à ladite première viscosité intrinsèque. En effet, il est apparu de manière surprenante que le peignage des fibres et leur coupe à une dimension prédéterminée permettait de contourner de manière avantageuse les techniques de filage et de tissage utilisées généralement pour les textiles de matière plastique et dès lors permettait de s'affranchir de la post-condensation du PET recyclé puisqu'il n'est dès lors plus nécessaire d'obtenir une viscosité intrinsèque suffisante pour ne pas boucher les têtes d'injection des filières.

De cette façon, le procédé selon la présente invention reste inscrit dans le caractère écologique de sa mission, est moins coûteux et plus rentable tout en permettant de traiter des déchets de PET de moins bonne qualité ou moins pur (ce qui réduit les étapes de tri du déchet PET collecté).

Dans le procédé selon la présente invention, ladite deuxième viscosité intrinsèque des fibres extrudées est comprise entre 0,48 et 0,52 dl/g (= entre 48 et 52 l/kg).

Dans le procédé selon l'invention, les fibres extrudées sont d'abord peignées, afin de les aligner dans une direction préférentielle, et ensuite coupées à une dimension prédéterminée. L'alignement des fibres est suivi d'une superposition croisée de couches desdites fibres coupées de dimension prédéterminée par alimentation latérale et par alimentation verticale d'une première bande transporteuse. L'alimentation latérale est effectuée au moyen d'une autre bande transporteuse effectuant un mouvement d'aller-retour pour déposer des fibres sur la première bande transporteuse dans une orientation transversale. Sur cette couche de fibres transversale, des fibres sont alors déposés avec une orientation longitudinale pour former une superposition de couches croisées.

Par le terme « croisé » au sens de l'invention, on entend des fibres disposées l'une sur l'autre, formant entre elles, dans un plan parallèle à celui de la bande transporteuse un angle compris entre 30 et 170°, en particulier en 60 et 120°, de préférence d'environ 90°. Cette structure de superposition de couches croisées des dites fibres donne à la matière textile sa résistance aux déchirures dans toutes les directions. La compression à chaud fige cette structure et une surface homogène et plane est obtenue. Cette matière est alors suffisamment rigide mais assez souple pour être travaillable. A ce stade, les fibres présentent ladite deuxième viscosité intrinsèque. Par les termes « matière comprenant majoritairement du polyéthylène téréphtalate », on entend un produit directement issu des procédés de recyclage de PET auquel aucune autre matière plastique n'est ajoutée mais qui peut comprendre des impuretés. Typiquement, ladite matière est constituée à hauteur de 98% de PET recyclé, de préférence à plus de 99% de PET recyclé. Ceci permet, à l'issue du procédé de fabrication d'obtenir une matière textile non tissée contentant 100% de PET recyclé.

Dans une forme de réalisation particulière, le procédé est caractérisé en ce que la compression à chaud est effectuée à une température comprise entre 180 et 230°C, de préférence entre 190 et 210°C.

En effet, dans le procédé selon l'invention, il est avantageux d'effectuer la compression à chaud à une température comprise entre 180 et 230°C, de préférence entre 190 et 210°C, de manière à obtenir une surface du textile homogène. Une telle compression à chaud peut être réalisée en utilisant par exemple des rouleaux de compression.

L'étape de compression peut être suivie d'une étape de formation d'un motif structurel par compression ou estampillage par un rouleau cannelé. Ceci fournit un aspect gaufré à la matière textile.

Dans une forme de réalisation particulière, le procédé est caractérisé en ce que l'étape c) comprend une superposition de 4 à 10 couches croisées, ou plus, en fonction du grammage souhaité du textile non tissé/m².

En effet, dans le procédé selon l'invention, il est avantageux que le nombre prédéterminé de superpositions latérales et transversales des fibres soit compris entre 4 et 10, puisque ceci donne au textile non tissé une résistance aux déchirures suffisante, sans pour autant consommer trop de fibre de PET.

Dans une forme de réalisation particulière, le procédé est caractérisé en ce que la dimension prédéterminé des fibres extrudées coupées est comprise entre 7 et 10 cm, et vaut de préférence 8 cm.

En effet, dans le procédé selon l'invention, il est avantageux que la dimension prédéterminé des fibres extrudées présentant donc ladite deuxième viscosité intrinsèque soit comprise entre 7 et 10 cm, et vaut de préférence 8 cm, pour arriver à un plus grand nombre de croisements entre fibres et à une solidification du textile non tissé. Les tests ont en effet montré que cette dimension surprenante permet d'obtenir une matière textile particulièrement résistante puisque la mise en contact des fibres à la compression est optimale.

Dans une forme de réalisation particulière, le procédé est caractérisé en ce qu'entre l'extrusion et le peignage, les fibres coupées de dimension prédéterminée présentant ladite deuxième viscosité intrinsèque sont mises en ballot.

En effet, dans le procédé selon l'invention, il est avantageux que la mise en ballot puisse s'effectuer dans un processus ultérieur à celui de l'extrusion mais avant le peignage et permette de réduire l'espace consacrée au processus dans l'usine, ainsi que le volume de stockage, si l'on décide de ne pas utiliser immédiatement la fibre extrudée.

Dans une forme de réalisation particulière, le procédé est caractérisé en ce qu'il comprend en outre une étape de ouatage entre l'extrusion et le peignage, éventuellement après la mise en ballot.

En effet, dans le procédé selon l'invention, il est avantageux que la mise en ouate puisse s'effectuer dans un processus ultérieur à celui de l'extrusion mais avant le peignage, lorsque les fibres de PET présentent ladite deuxième viscosité intrinsèque. Le ouatage permet d'aérer les fibres et de les séparer les unes des autres de manière à faciliter le peignage et à assurer l'uniformité des couches en terme de nombre de fibres par m² et donc de garantir une épaisseur et un poids linéaire

Dans une forme de réalisation particulière, le procédé est caractérisé en ce qu'il comprend une étape de refroidissement des couches de fibres croisées et comprimées.

Dans une forme de réalisation particulière, le procédé est caractérisé en ce qu'il comprend une étape d'impression des couches de fibres croisées et comprimées, éventuellement préalablement refroidies.

En effet, dans le procédé selon l'invention, il est avantageux que l'impression puisse s'effectuer dans un processus ultérieur à celui de la compression, pour rendre le textile non tissé attractif visuellement. Les techniques traditionnelles d'impression comme la lamination ne permettent pas de d'obtenir un textile non tissé imprimé à caractère écologique, composé de 100% de PET recyclé, et recyclable à 100%. Une impression à caractère écologique peut être réalisée par exemple par transfert d'images, sur la surface d'un textile non tissé bien plane.

Dans une forme de réalisation particulière, le procédé est caractérisé en ce qu'il comprend une étape de traitement antibactérien de la matière textile.

En effet, dans le procédé selon l'invention, il est avantageux que la matière textile puisse subir un traitement antibactérien pour prévenir le développent de certaines bactéries sur la surface du textile non tissé. Le textile non tissé traité est particulièrement recommandé pour le secteur alimentaire ou pour les soins de santé.

L'invention a aussi pour objet une matière textile non-tissé, issue du procédé selon l'invention, indiqué dans les revendications annexées. Cette matière textile non-tissée est formée de fibres présentant une deuxième viscosité intrinsèque issues de PET 100% recyclé présentant une première viscosité intrinsèque supérieure ou égale à ladite deuxième viscosité intrinsèque et caractérisées par une viscosité intrinsèque comprise entre 0,48 et 0,52 dl/g après extrusion.

L'invention a aussi pour objet un sac en textile selon l'invention, de préférence contenant plus de 98% de PET.

D'autres caractéristiques, détails, avantages de l'invention ressortiront de la description donné ci-après, à titre non limitatif et en faisant référence au dessin annexé.

La figure est un exemple de réalisation d'un procédé de recyclage d'objets de PET usagés selon l'invention.

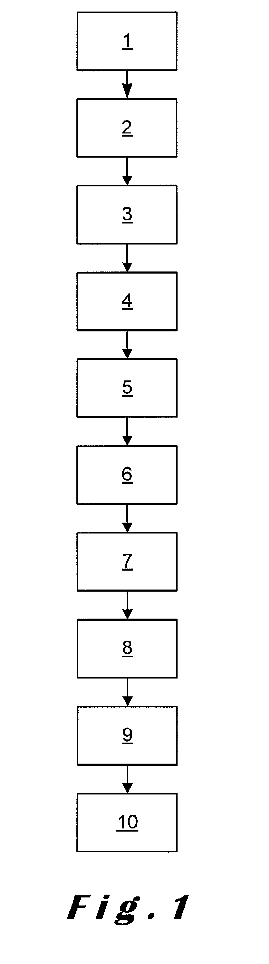

Dans le déroulement du procédé représenté schématiquement à la figure 1 pour un mode opératoire selon l'invention, on broie dans une étape préparatoire des objets de PET usagés rassemblés pour obtenir des paillettes de PET. Dans une étape de purification, on peut procéder à un lavage, un rinçage, un essorage et/ou un tamisage. Dans l'étape suivante, les paillettes de PET sont chauffées (1) à une température suffisante pour liquéfier les paillettes. Le liquide ainsi obtenu est ensuite extrudé (2), pour obtenir des fibres de PET. Ces étapes peuvent ici être conduites dans des cuves différentes qui peuvent être formées de manière particulièrement avantageuse pour les cas d'applications considérés.

Les fibres de PET sont étirées et découpées (3) en fibres d'une dimension prédéterminée au moyen d'un système de coupe approprié. La dimension prédéterminée des fibres extrudées coupées est comprise entre 7 et 10 cm, et vaut de préférence 8 cm. Après le coupage, les fibres extrudées coupées sont mises en ballots (4).

Dans une étape suivante, les fibres extrudées coupées sont mises en ouate (5), transportées et aérées. La mise en ouate est effectuée par décompression des fibres, (provenant du ballot) et séparation physique au moyen de brosses. Les fibres séparées sont alors aspirée verticalement par une soufflerie.

Les fibres extrudées coupées sont peignées (6) pour les aligner dans une direction préférentielle, puis l'alignement des fibres est suivi d'une superposition croisée de couches (7) desdites fibres coupées de dimension prédéterminée par alimentation latérale. Cette alimentation verticale peut se faire avantageusement en utilisant une première bande transporteuse. L'alimentation latérale peut être effectuée au moyen d'une autre bande transporteuse effectuant un mouvement d'aller-retour pour déposer des fibres sur la première bande transporteuse dans une orientation transversale. Sur cette couche de fibres transversale, des fibres sont alors déposés avec une orientation longitudinale pour former une superposition de couches croisées.

Par le terme « croisé » au sens de l'invention on entend des fibres disposées l'une sur l'autre, formant entre elles, dans le plan de la bande transporteuse un angle compris entre 30 et 170°, en particulier en 60 et 120°, de préférence d'environ 90°. Cette structure de superpositions de couches croisées des dites fibres donne à la matière textile sa résistance aux déchirures dans toutes les directions. Le nombre de couches superposées dépend des propriétés mécaniques souhaitées. Il est avantageux que ce nombre prédéterminé de superpositions latérales et transversales des fibres soit compris entre 4 et 10, puisque ceci donne au textile non tissé une résistance aux déchirures suffisante, sans pour autant consommer trop de fibre de PET.

Dans une étape suivante, les couches de fibres coupées orientées transversalement et latéralement (8) sont compressés à chaud pour obtenir une matière textile, à une température comprise entre 180 et 230°C, de préférence entre 190 et 210°C. La compression à chaud est réalisée de préférence par des rouleaux de compression. On obtient ainsi une surface de textile homogène et plane.

La compression à chaud peut être suivie d'une impression (9). On peut par exemple dans un premier temps imprimer une image sur un support en papier, pour ensuite transférer à chaud l'image sur le textile non tissé via des tubes chauffants. L'impression se fait avantageusement sur du papier recyclé et recyclable pour réduire l'impact écologique. La température est choisie en fonction de l'imprégnation des encres dans les fibres PET et pour garantir la persistance des couleurs pour toutes les formes d'usage.

En outre, pour adapter la matière textile par exemple aux usages dans le secteur alimentaire ou médical, on peut procéder à une étape de traitement antibactérien (10). Des agents antibactériens peuvent être pulvérisés sur le textile, suivi d'un séchage par rouleaux chauffants.

Avantageusement, les sacs obtenus selon la présente invention présentent une épaisseur comprise entre 0,5 et 2 mm.

La matière textile obtenue peut être découpée et assemblée pour la production de sacs.

Avantageusement, l'exemple du mode réalisation du procédé décrit ci-dessus peut être entièrement synchronisé et automatisé, et toutes les étapes raccordées les une aux autres, afin d'assurer une production continue de textile non tissé.

### Exemple 1

Afin de déterminer les caractéristiques d'un sac non tissé obtenu selon la présente invention, la deuxième viscosité intrinsèque des fibres formant le sac, le point de fusion et le point de cristallisation ont été déterminés et comparés à ces mêmes paramètres pour les fibres (1) d'une feuille de plastique beige neuve, (2) d'une feuille de plastique noire neuve et (3) d'un sac de composition inconnue.

La viscosité intrinsèque a été mesurée en solution selon la norme ISO 1628. Les points de fusion et de cristallisation ont été déterminés par calorimétrie différentielle à balayage respectivement par chauffage de 50 à 280°C à raison de 10°C par minute et par refroidissement de 280 à 50°C à raison de 100°C par minute. Les résultats obtenus sont présentés dans les tableaux 1 à 3 ci-dessous.

**Tableau 1 : viscosité intrinsèque**

| | Viscosité intrinsèque (dl/g) |
|---|---|
| Sac 100% recyclé selon l'invention | 0,50 |
| Feuille plastique beige neuve | 0,57 |
| Feuille plastique noire neuve | N.D. |
| Sac de composition inconnue | 0,58 |

| | |
|---|---|
| N.D. : non déterminé | |

**Tableau 2 : point de fusion**

| | Point de fusion moyen (°C) (n=2) |
|---|---|
| Sac 100% recyclé selon l'invention | 250,0 |
| Feuille plastique beige neuve | 253,5 |
| Feuille plastique noire neuve | 253,5 |
| Sac de composition inconnue | 253,5 |

**Tableau 3 : point de cristallisation**

| | Point de cristallisation moyen (°C) |
|---|---|
| | (n=2) |
| Sac 100% recyclé selon l'invention | 153,0 |
| Feuille plastique beige neuve | 157,0 |
| Feuille plastique noire neuve | 168,0 |
| Sac de composition inconnue | 169,0 |

Tous ces paramètres sont systématiquement inférieurs pour le sac 100% recyclé selon l'invention. La plus faible viscosité intrinsèque indique que le sac 100% recyclé selon l'invention est bien constitué de fibres issues d'un polymère 100% recyclé.

### Exemple 2

Afin de caractériser le sac non tissé obtenu selon la présente invention, une étude des composés volatils d'origines organiques a été réalisée sur (1) le sac 100% recyclé selon l'invention, (2) une feuille de plastique beige neuve et (3) un sac de composition inconnue. Une analyse par chromatographie en phase gazeuse (Thermo Trace GC^{®} disponible auprès de la société) couplée à un spectromètre de masse a été réalisée sur une colonne analytique Restek^{®} #49914 disponible auprès de la société (L = 20 m ; l = 0,18 mm ; D = 1 µm) selon les paramètres repris dans le tableau 4.

**Tableau 4 : paramètres pour l'analyse par chromatographie en phase gazeuse (GC) couplée à un spectromètre de masse (MS)**

| | |
|---|---|
| Temps d'incubation | 30 min |
| Température d'incubation | 120°C |
| Volume injecté | 1 ml |
| Température initiale | 30°C |
| Temps initial | 3 min |
| Rampe de température 1 | 15°C/min |
| Température finale 1 | 250°C |
| Temps final 1 | 1 min |
| Temps d'analyse GC | 18,5 min |
| Mode injection | CT |
| Division du flux | 30 ml/min |
| Température d'injecteur | 200°C |
| Flux du gaz porteur | 1,5 ml/min (constant) |
| Gaz porteur | He |

L'analyse par chromatographie en phase gazeuse couplée à un spectromètre de masse a permis de mettre en évidence des profils chromatographiques différents pour chacun des échantillons. Ces profils sont présentés au tableau 5.

Comme on peut le constater, seul le sac 100% recyclé selon l'invention présente des pics aux temps de rétention 11,72 et 13,59 correspondant respectivement au 2-(2-butoxyethoxy)-éthanol et au dodécanal.

**Tableau 5 : composés volatils identifiés**

| | Temps de rétention | Sac 100% recyclé selon l'invention | Feuille de plastique beige neuve | Sac de composition inconnue |
|---|---|---|---|---|
| N.D. | 2,08 | x | | |
| 1,1,3,3-tétraoxide de 2,4-dichloro-2,4-difluoro-1,3-dithiéthane | 3,72 | | | x |
| 2,2-dioxide de 3-chloro-3-trifluorométhyl-2-thiabicyclo [2,2,1]hept-5-ène | 3,94 | | x | x |
| Acide acétique | 5,10 | x | | x |
| Toluène | 5,96 | | x | x |
| N.D. | 6,49 | x | | |
| N.D. | 8,50 | | | x |
| 2-butanone | 8,84 | | x | |
| Octanal | 9,64 | x | x | |
| Nonanal | 10,74 | x | x | x |
| Acide 2-éthyl-hexanoïque | 11,17 | x | x | |
| 2-(2-butoxyéthoxy) éthanol | 11,72 | x | | |
| Décanal | 11,75 | | x | x |
| N.D. | 11,97 | | x | x |
| 2,4,5 triméthyl-benzèneamine | 12,44 | | | x |
| Terpinéol | 13,35 | x | x | x |
| N.D. | 13,53 | | x | x |
| Dodécanal | 13,59 | x | | |
| N.D. | 14,90 | | x | x |
| N.D. | 15,26 | | | x |
| Acide dioctyl ester hexanedioïque | 16,18 | | x | |
| N.D. | 16,88 | | | x |
| N.D. | 17,18 | | x | |
| 2,2-d iméthoxy-1,2-diphényle éthanone | 17,49 | | x | x |
| N.D. | 18,21 | | x | x |

| | | | | |
|---|---|---|---|---|
| N.D. : non identifié | | | | |

### Exemple 3

Afin de caractériser le sac non tissé obtenu selon la présente invention, des mesures par spectrométrie de fluorescence de rayons X ont été réalisées pour déterminer les concentrations des différents éléments qui composent (1) le sac 100% recyclé selon l'invention, (2) une feuille de plastique beige neuve et (3) un sac de composition inconnue.

Cette analyse a permis de mettre en évidence des compositions différentes pour les trois échantillons testés qui sont présentées au tableau 6.

Comme on peut le constater, seul le sac 100% recyclé selon l'invention présente du phosphore P et du calcium Ca. Le sac 100% recyclé selon la présente invention est celui qui contient le plus de composés différents, ce qui confirme l'origine recyclée du produit.

**Tableau 6 : concentration (%) des éléments identifiiés**

| Elément | Sac 100% recyclé selon l'invention | Feuille de plastique beige neuve | Sac de composition inconnue |
|---|---|---|---|
| C₁₀H₈O₄ | 99,85 | 99,8075 | 99,8394 |
| Ti | 0,0845 | 0,1234 | 0,1571 |
| Cl | 0,0194 | 0,0404 | |
| Na | 0,0100 | 0,0141 | |
| P | 0,0085 | | |
| K | 0,0078 | 0,0027 | |
| Si | 0,0077 | 0,0070 | 0,0022 |
| S | 0,0070 | 0,0028 | |
| Ca | 0,0048 | | |
| Al | 0,0026 | 0,0021 | 0,0013 |

Il est bien entendu que la présente invention n'est en aucune façon limitée aux formes des réalisations décrites ci-dessus et que bien des modifications peuvent y être apportées sans sortir du cadre des revendications annexées.

## Revendications

1. Procédé de recyclage de polyéthylène téréphtalate usagé pour fabriquer une matière textile non tissée, comprenant les étapes suivantes:
a) chauffage d'une matière comprenant majoritairement du polyéthylène téréphtalate recyclé présentant une première viscosité intrinsèque, de préférence sous forme de paillettes, pour obtenir un liquide et extrusion dudit liquide ainsi obtenu en fibres de PET extrudées présentant une deuxième viscosité intrinsèque inférieure ou égale à ladite première viscosité intrinsèque ;
b) peignage desdites fibres de PET extrudées présentant ladite deuxième viscosité intrinsèque avec coupage à une dimension prédéterminée pour obtenir des fibres coupées de dimension prédéterminée;
c) superposition en couches croisées desdites fibres coupées de dimension prédéterminée, et;
d) compression à chaud desdites couches de fibres croisées pour obtenir ladite matière textile non tissée.

2. Procédé selon la revendication 1, dans lequel ladite deuxième viscosité intrinsèque desdites fibres de PET extrudées est comprise entre 0,48 et 0,52 dl/g.

3. Procédé selon les revendications 1 et 2, dans lequel ladite matière comprenant du polyéthylène téréphtalate est constituée à au moins 98% de polyéthylène téréphtalate, le % résiduel pour arriver à 100% étant constitué d'impuretés.

4. Procédé selon l'une quelconque des revendications 1 à 3, **caractérisé en ce que** la compression à chaud est effectuée à une température comprise entre 180 et 230°C, de préférence entre 190 et 210°C.

5. Procédé selon l'une quelconque des revendications 1 à 4, **caractérisé en ce que** l'étape c) comprend une superposition de 4 à 10 couches croisées.

6. Procédé selon l'une quelconque des revendications 1 à 5, **caractérisé en ce que** la dimension prédéterminé des fibres extrudées coupées est comprise entre 7 et 10 cm, et vaut de préférence 8 cm.

7. Procédé selon l'une quelconque des revendications 1 à 6, **caractérisé en ce qu'**entre l'extrusion et le peignage, les fibres coupées de dimension prédéterminées présentant ladite deuxième viscosité intrinsèque sont mises en ballot.

8. Procédé selon l'une quelconque des revendications 1 à 7, **caractérisé en ce qu'**il comprend en outre une étape de ouatage entre l'extrusion et le peignage, éventuellement après la mise en ballot, lorsque lesdites fibres de PET présentent ladite deuxième viscosité intrinsèque.

9. Procédé selon l'une quelconque des revendications 1 à 8, **caractérisé en ce qu'**il comprend une étape de refroidissement des couches de fibres croisées et comprimées.

10. Procédé selon l'une quelconque des revendications 1 à 9, **caractérisé en ce qu'**il comprend une étape d'impression des couches de fibres croisées et comprimées, éventuellement préalablement refroidies.

11. Procédé selon l'une quelconque des revendications 1 à 10, **caractérisé en ce qu'**il comprend une étape de traitement antibactérien de la matière textile.

12. Matière textile non-tissé issu du procédé, selon l'une quelconque des revendications 1 à 11, **caractérisée en ce qu'**elle présente une deuxième viscosité intrinsèque et **en ce qu'**elle est issue de PET 100% recyclé présentant une première viscosité intrinsèque supérieure ou égale à ladite deuxième viscosité intrinsèque.

13. Matière textile non-tissé issu du procédé, selon l'une quelconque des revendications 1 à 12, **caractérisée en ce que** lesdites fibres qui la composent présentent ladite deuxième viscosité intrinsèque qui est comprise entre 0,48 et 0,52 dl/g après extrusion.

14. Sac en matière textile selon les revendications 1 et 13.

15. Sac selon la revendication 14, **caractérisé en ce qu'**il comprend des éléments contaminants choisis parmi le groupe Ti, Cl, Na, P, K, Si, S, Ca, Al et leurs associations.

16. Sac selon les revendications 14 et 15, caractérisé en ce son épaisseur est comprise entre 0,5 et 2 mm.

## Revendications modifiées

### Revendications modifiées conformément à la règle 137(2) CBE.

**1.** Procédé de recyclage de polyéthylène téréphtalate usagé pour fabriquer une matière textile non tissée, comprenant
- une étape de chauffage d'une matière comprenant majoritairement du polyéthylène téréphtalate recyclé présentant une première viscosité intrinsèque, de préférence sous forme de paillettes, pour obtenir un liquide et extrusion dudit liquide ainsi obtenu en fibres de PET extrudées présentant une deuxième viscosité intrinsèque inférieure ou égale à ladite première viscosité intrinsèque, et
- une étape de compression à chaud desdites fibres pour obtenir ladite matière textile non tissée,
**caractérisé en ce que** ladite étape de chauffage est suivie par les étapes suivantes avant ladite compression à chaud desdites fibres :
a) peignage desdites fibres de PET extrudées présentant ladite deuxième viscosité intrinsèque avec coupage à une dimension prédéterminée pour obtenir des fibres coupées de dimension prédéterminée; et
b) superposition en couches croisées desdites fibres coupées de dimension prédéterminée.

**2.** Procédé selon la revendication 1, dans lequel ladite deuxième viscosité intrinsèque desdites fibres de PET extrudées est comprise entre 0,48 et 0,52 dl/g.

**3.** Procédé selon les revendications 1 et 2, dans lequel ladite matière comprenant du polyéthylène téréphtalate est constituée à au moins 98% de polyéthylène téréphtalate, le % résiduel pour arriver à 100% étant constitué d'impuretés.

**4.** Procédé selon l'une quelconque des revendications 1 à 3, **caractérisé en ce que** la compression à chaud est effectuée à une température comprise entre 180 et 230°C, de préférence entre 190 et 210°C.

**5.** Procédé selon l'une quelconque des revendications 1 à 4, **caractérisé en ce que** l'étape c) comprend une superposition de 4 à 10 couches croisées.

**6.** Procédé selon l'une quelconque des revendications 1 à 5, **caractérisé en ce que** la dimension prédéterminé des fibres extrudées coupées est comprise entre 7 et 10 cm, et vaut de préférence 8 cm.

**7.** Procédé selon l'une quelconque des revendications 1 à 6, **caractérisé en ce qu'**entre l'extrusion et le peignage, les fibres coupées de dimension prédéterminées présentant ladite deuxième viscosité intrinsèque sont mises en ballot.

**8.** Procédé selon l'une quelconque des revendications 1 à 7, **caractérisé en ce qu'**il comprend en outre une étape de ouatage entre l'extrusion et le peignage, éventuellement après la mise en ballot, lorsque lesdites fibres de PET présentent ladite deuxième viscosité intrinsèque.

**9.** Procédé selon l'une quelconque des revendications 1 à 8, **caractérisé en ce qu'**il comprend une étape de refroidissement des couches de fibres croisées et comprimées.

**10.** Procédé selon l'une quelconque des revendications 1 à 9, **caractérisé en ce qu'**il comprend une étape d'impression des couches de fibres croisées et comprimées, éventuellement préalablement refroidies.

**11.** Procédé selon l'une quelconque des revendications 1 à 10, **caractérisé en ce qu'**il comprend une étape de traitement antibactérien de la matière textile.

**12.** Matière textile non-tissé issue du procédé, selon l'une quelconque des revendications 1 à 11, **caractérisée en ce qu'**elle présente une deuxième viscosité intrinsèque et **en ce qu'**elle est issue de PET 100% recyclé présentant une première viscosité intrinsèque supérieure ou égale à ladite deuxième viscosité intrinsèque.

**13.** Matière textile non-tissé issue du procédé, selon l'une quelconque des revendications 1 à 12, **caractérisée en ce que** lesdites fibres qui la composent présentent ladite deuxième viscosité intrinsèque qui est comprise entre 0,48 et 0,52 dl/g après extrusion.

**14.** Sac en matière textile selon la revendication 13.

**15.** Sac selon la revendication 14, **caractérisé en ce qu'**il comprend des éléments contaminants choisis parmi le groupe Ti, Cl, Na, P, K, Si, S, Ca, Al et leurs associations.

**16.** Sac selon les revendications 14 et 15, **caractérisé en ce que** son épaisseur est comprise entre 0,5 et 2 mm.
